(19) Europäisches Patentamt
European Patent Office
Office européen des brevets

(11) EP 3 392 035 B1

(12) EUROPEAN PATENT SPECIFICATION

(45) Date of publication and mention of the grant of the patent:
**24.03.2021 Bulletin 2021/12**

(21) Application number: **16875708.6**

(22) Date of filing: **15.12.2016**

(51) Int Cl.:
***B32B 37/06*** *(2006.01)* ***B32B 7/04*** *(2019.01)*
***B32B 27/28*** *(2006.01)* ***C09J 123/36*** *(2006.01)*
***B32B 27/00*** *(2006.01)* ***B29C 43/20*** *(2006.01)*
***B29C 45/13*** *(2006.01)* ***B65D 65/40*** *(2006.01)*

(86) International application number:
**PCT/JP2016/087330**

(87) International publication number:
**WO 2017/104731 (22.06.2017 Gazette 2017/25)**

# (54) LAMINATE AND MANUFACTURING METHOD THEREFOR

LAMINAT UND HERSTELLUNGSVERFAHREN DAFÜR

STRATIFIÉ ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2015 JP 2015244253**
**26.02.2016 JP 2016035830**

(43) Date of publication of application:
**24.10.2018 Bulletin 2018/43**

(73) Proprietor: **Mitsui Chemicals, Inc.**
**Minato-ku**
**Tokyo 105-7122 (JP)**

(72) Inventors:
- **SHIGA, Ryohei**
  **Ichihara-shi**
  **Chiba 299-0108 (JP)**
- **YAMASAKI, Takashi**
  **Ichihara-shi**
  **Chiba 299-0108 (JP)**
- **OGAWA, Yoshiyuki**
  **Ichihara-shi**
  **Chiba 299-0108 (JP)**
- **YASUI, Shigeyuki**
  **Ichihara-shi**
  **Chiba 299-0108 (JP)**
- **MORI, Akihide**
  **Sodegaura-shi**
  **Chiba 299-0265 (JP)**
- **IMAI, Tadashi**
  **Sodegaura-shi**
  **Chiba 299-0265 (JP)**
- **ISAJI, Yasuhiro**
  **Tokyo 105-7122 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 860 169** **EP-A1- 1 977 888**
**WO-A1-2006/098290** **WO-A1-2007/040261**
**WO-A1-2007/040261** **WO-A1-2013/146801**
**JP-A- 2002 179 905** **JP-A- 2002 264 281**
**JP-A- 2009 173 804**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 392 035 B1

## Description

### Technical Field

The present invention relates to a novel laminate and a method for manufacturing the same.

### Background Art

Up to now, laminates having a resin layer and an adhesive layer have been known.

For example, a polyketone has excellent gas barrier properties and is therefore expected as a material for food preservation or food packaging. However, the polyketone is inferior in heat sealability and impact strength as it is, and therefore is usually used as a laminate with a polyolefin, but the polyketone is inferior in adhesiveness with other resins such as polyolefins, so that it is considered that the polyketone usually needs some sort of an adhesive layer. As the adhesive layer for a polyketone and a polyolefin, for example, an adhesive layer in which a polyolefin is modified with an unsaturated carboxylic acid, and the modified polyolefin is further modified with an amine is proposed (for example, Patent Literature 1). Moreover, an adhesive layer comprising a composition for adhesion comprising a graft-modified polyolefin and a tackifier is proposed (for example, Patent Literature 2).

In addition, a polyphenylene sulfide (hereinafter, also referred to as PPS) has characteristics of high heat resistance and high chemical resistance, and is used for example for electronic parts, mechanical parts, medical parts, and warm water pipes. However, PPS is expensive, and making a complex with a different kind of material is therefore studied, and as an adhesive for the complex, a modified polyolefin (adhesive resin) obtained by graft-polymerizing an epoxy group-containing ethylenically unsaturated monomer onto a polyolefin is studied (for example, Patent Literature 3).

Furthermore, EP 1 977 888 A1 inter alia relates to a laminate of at least two or more layers comprising a structure obtained by bonding and laminating an adhesive (A) and a fluorocopolymer (B). The adhesive (A) is obtained by allowing a polyolefin (a) having a group reactive with a carbodiimide group to react with a compound (b) having a carbodiimide group, and has a density of 0.870 to 0.940 g/cm$^3$.

In EP 1 860 169 A1, an adhesive is described, which is obtained by reaction of a polyolefin (A) having a group reactive with a carbodiimide group and a compound (B) containing a carbodiimide group in the presence of an unmodified polyolefin (C). The adhesive is used in laminates comprising a polar resin.

WO 2007/040261 A1 is concerned with an adhesive (D) being obtainable by allowing a polyolefin (A) having a group capable of reacting with a carbodiimide group to react with a carbodiimide group-containing compound (B) in the presence of an unmodified polyolefin (C) and having a density of 0.870 g/cm$^3$ to 0.920 g/cm$^3$. Furthermore, the use of the adhesive provides a laminate of a polar resin (F) and a polyolefin (G).

### Citation List

#### Patent Literature

Patent Literature 1: National Publication of International Patent Application No. 1996-503996
Patent Literature 2: Japanese Patent Laid-Open No. 10-286912
Patent Literature 3: Japanese Patent Laid-Open No. 2003-268051

### Summary of Invention

#### Technical Problem

However, a sufficient adhesive strength cannot be obtained between a layer comprising: a polyketone; and a resin such as a polar resin (example: PPS), and a conventional adhesive layer. In addition, with respect to the polyketone, an amine to be used for modification is in a liquid form, so that special facilities and processes are needed for blending an unsaturated carboxylic acid-modified polyolefin (solid) and the amine (liquid) in manufacture of the adhesive layer to make the manufacture complicated. Further, there are various problems in that handling of the amine is not easy, the amine is harmful to a human body, and so on. Moreover, with respect to the polar resin such as PPS, the above-described adhesive resin has a low heat resistance and there is a problem that the adhesive strength with a polar resin is significantly lowered in a high-temperature atmosphere. In addition, as an adhesive resin having a high heat resistance, a maleic anhydride-graft-modified polyolefin is also studied; however, adhesion between the above-described polyolefin and the polar resin is difficult.

Accordingly, an object of the present invention is to provide a laminate that can be manufactured easily and that has a sufficient adhesive strength between an adhesive layer and a layer comprising a polyketone or a PPS as a polar resin, for example, a laminate having the above-described sufficient adhesive strength not only at normal temperature but also in a high-temperature atmosphere.

Solution to Problem

The present inventors have conducted diligent studies to solve the problems. As a result, the present inventors have found that the problems can be solved by a laminate having the following constitution, and thereby completed the present invention.
The present invention includes the following [1] to [9].

[1] A laminate comprising: a layer (A) comprising a resin not having active hydrogen in a main molecular skeleton thereof; and an adhesive layer (B) being at least in partial contact with the layer (A) and comprising a composition for adhesion, wherein the composition for adhesion satisfies the following requirements (i) to (iii).

(i) Comprising a polyolefin being a product of reaction between a polyolefin (a) having a group that reacts with a carbodiimide group and a carbodiimide group-containing compound (b).
(ii) Comprising a carbodiimide group in an amount of 0.1 to 50 mmol per 100 g of the composition for adhesion.
(iii) Having a density of 0.870 to 0.940 g/cm$^3$.

The layer (A) is a layer (A1) comprising a polyketone or a layer (A2) comprising a polyphenylene sulfide.
[2] The laminate according to [1], comprising a structure of the layer (A1) comprising a polyketone/the adhesive layer (B) comprising the composition for adhesion/a layer (C) comprising another resin other than a polyketone.
[3] The laminate according to [2], wherein the layer (C) is a layer comprising a polyolefin.
[4] The laminate according to any one of [1] to [3], wherein the layer (A1) is a layer comprising a linear polymer comprising: a carbonyl group; and a divalent organic group derived from an ethylenically unsaturated compound or a divalent organic group obtained by connecting two or more divalent organic groups derived from an ethylenically unsaturated compound, with the carbonyl group and the divalent organic group being alternately connected.
[5] The laminate according to [4], wherein the layer (A1) is a layer comprising an ethylene-carbon monoxide copolymer or an ethylene-propylene-carbon monoxide copolymer.
[6] The laminate according to any one of [1] to [5], wherein the carbodiimide group-containing compound (b) is a carbodiimide group-containing compound having 5 or more carbodiimide groups in one molecule.
[7] The laminate according to any one of [1] to [6], obtained by co-extrusion molding, laminate molding, blow molding, or co-injection molding.
[8] A method for manufacturing a laminate comprising: a layer (A) comprising a resin not having active hydrogen in a main molecular skeleton thereof; and an adhesive layer (B) being at least in partial contact with the layer (A) and comprising a composition for adhesion, wherein the method comprises a step of allowing a resin composition comprising the resin not having active hydrogen in a main molecular skeleton thereof and the composition for adhesion to adhere to each other by co-extrusion molding, laminate molding, blow molding, or co-injection molding, and the composition for adhesion satisfies the following requirements (i) to (iii).

(i) Comprising a polyolefin being a product of reaction between a polyolefin (a) having a group that reacts with a carbodiimide group and a carbodiimide group-containing compound (b).
(ii) Comprising a carbodiimide group in an amount of 0.1 to 50 mmol per 100 g of the composition for adhesion.
(iii) Having a density of 0.870 to 0.940 g/cm$^3$.

The resin not having active hydrogen in a main molecular skeleton thereof is a polyketone or a polyphenylene sulfide, and the layer (A) is a layer (A1) comprising a polyketone or a layer (A2) comprising a polyphenylene sulphide.
[9] The method for manufacturing a laminate according to [8], wherein the adhesion is performed under a condition of an adhesion temperature of 260°C or higher.

Advantageous Effects of Invention

According to the present invention, a laminate in which a sufficient adhesive strength with a layer comprising a polyketone or a PPS as a polar resin can be obtained and which is excellent in terms of the adhesive strength not only

at normal temperature but also in a high-temperature atmosphere can be obtained by using a particular composition for adhesion comprising a polyolefin preferably having a carbodiimide group, the polyolefin obtained by reacting a polyolefin (a) which has a group that reacts with a carbodiimide group and which can be manufactured easily and a carbodiimide group-containing compound (b) which can also be manufactured easily. By using the composition for adhesion as an adhesive layer between a polyketone layer and a resin layer comprising another resin, such as, for example, a polyolefin, other than a polyketone, the laminate in which the polyketone layer and the resin layer are allowed to adhere to each other firmly can be obtained more simply.

Description of Embodiments

Hereinafter, the present invention will be described in more detail.

[Laminate]

A laminate according to the present invention comprises: a layer (A) comprising a resin not having active hydrogen in the main molecular skeleton thereof; and an adhesive layer (B) being at least in partial contact with the layer (A) and comprising a composition for adhesion described later. The layer (A) is a layer (A1) comprising a polyketone or a layer (A2) comprising a polyphenylene sulfide as described in the following first laminate and second laminate.

The first laminate comprises: a layer (A1) comprising a polyketone; and an adhesive layer (B) being at least in partial contact with the layer (A1) and comprising a composition for adhesion described later. The first laminate may further comprise a layer (C) comprising another resin other than a polyketone.

The second laminate comprises: a layer (A2) comprising a polyphenylene sulfide as a polar resin; and an adhesive layer (B) being at least in partial contact with the layer (A2) and comprising a composition for adhesion described later.

The composition for adhesion is also referred to as an adhesive.

[Layer (A)]

The layer (A) comprises a resin not having active hydrogen in the main molecular skeleton thereof. The main molecular skeleton in the resin means a molecular moiety excluding molecular terminals. The resin includes a polyketone and or a polyphenylene sulphide as a polar resin other than the polyketone.

<Layer (A1) Comprising Polyketone>

In the first laminate, the layer (A1) comprises a polyketone. Examples of the polyketone include a linear polymer comprising: a carbonyl group (CO); and a divalent organic group derived from an ethylenically unsaturated compound or a divalent organic group obtained by connecting two or more divalent organic groups derived from an ethylenically unsaturated compound, with the carbonyl group and the divalent organic group being alternately connected, and the linear polymer is usually represented by formula (1).

[Formula 1]

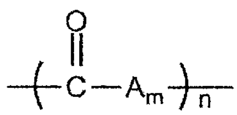 ------ (1)

In formula (1), A represents a divalent organic group derived from an ethylenically unsaturated compound, m represents 1 to 6, n represents an integer of 2 or more, preferably an integer of 2 to 6000. Such a polyketone is publicly known and is usually a polymer obtained by polymerizing carbon monoxide and an ethylenically unsaturated compound.

Examples of the ethylenically unsaturated compound include: α-olefins having 2 to 12 carbon atoms such as ethylene, propylene, 1-butene, isobutylene, and 1-pentene, preferably straight-chain α-olefins having 2 to 6 carbon atoms, more preferably ethylene alone, or ethylene and propylene; dienes or halides thereof such as butadiene, isoprene, and 2-chlorobutadiene-1,3; vinylidenes or halides thereof such as vinylidene chloride; vinyl esters or halides thereof such as vinyl acetate, vinyl chloroacetate, vinyl dimethylacetate, and vinyl trimethylacetate; halogenated vinyl such as tetrafluoroethylene and chloroethylene; vinyl acetals such as ketene methyl(vinyl)acetal; vinyl ketones such as vinyl methyl ketone and vinyl ethyl ketone; styrenes or derivatives thereof such as styrene, chlorostyrene, and α-methylstyrene; acrylic acid and methacrylic acid, and ester compounds, amide compounds, nitrile compounds, and acid halides derived

therefrom; and vinyl esters of unsaturated carboxylic acids, such as vinyl hexenoate and vinyl crotonate.

Among these, straight-chain α-olefins having 2 to 6 carbon atoms are preferable as the ethylenically unsaturated compound, and the ethylenically unsaturated compound particularly preferably contains ethylene alone, or ethylene and propylene. Accordingly, as the polyketone, an ethylene/carbon monoxide copolymer and an ethylene/propylene/carbon monoxide copolymer are preferable.

The ethylenically unsaturated compounds may be used singly, or two or more thereof may be used. In the latter case, ethylene and a straight-chain α-olefin having 3 to 6 carbon atoms or propylene in particular are preferably used in combination. In this case, a molar ratio of ethylene/the straight chain α-olefin having 3 to 6 carbon atoms is preferably larger than 1, more preferably 2 to 30.

As for the polyketone, the melting point is usually 175 to 300°C, preferably 210 to 270°C, and the intrinsic viscosity number (IV) measured in m-cresol with a standard capillary viscosity measuring apparatus is usually 0.5 to 10 dl/g, preferably 0.8 to 4 dl/g.

The polyketone is publicly known, and, for example, a linear alternating polyketone terpolymer of carbon monoxide, ethylene, and another ethylenically unsaturated compound (for example, propylene) is described in U.S. Patent No. 4,880,903. The polyketone can be manufactured by polymerizing carbon monoxide and the ethylenically unsaturated compound by a publicly known method. Details on the manufacturing method are described in Japanese Patent Laid-Open No. 47-32100, Japanese Patent Publication No. 5-87527, and Japanese Patent Publication No. 6-13608.

As for the polyketone, commercially available products can be used. Examples thereof include AKROTEK:PK-HM, product name, manufactured by AKRO-PLASTIC GmbH, and Carilon, product name, manufactured by Shell.

The polyketones may be used singly, or two or more thereof may be used.

In the layer (A1), the content of the polyketone is preferably 50% by mass or more, more preferably 70% by mass or more, and still more preferably 80% by mass or more.

<Layer (A2) Comprising Polar Resin>

In the second laminate, the layer (A2) comprises a polar resin and includes a polyphenylene sulphide as a polar resin. The polar resin is preferably a polymer having active hydrogen having reactivity with a carbodiimide group existing in the composition for adhesion, and, for example, is a polymer having a group derived from a carboxylic acid, an amine, an alcohol, or a thiol. Specific examples of the polymer include polyesters, polyamides, polycarbonates, acrylic resins, polyphenylene sulfides (PPSs), polyethers such as polyphenylene oxides, polyether sulfones (PESs), and polyacetals, ethylene-vinyl alcohol copolymers, acrylonitrile-butadiene-styrene copolymers (ABS), polyolefins having active hydrogen such as modified polyolefins, ethylene-acrylic acid copolymers, and ethylene-methacrylic acid copolymers. It is to be noted that polyesters, polycarbonates, PPSs, polyphenylene oxides, polyether sulfones, and polyacetals do not have active hydrogen except at the molecular terminals, and these are each one example of the polar resin not having active hydrogen in the main molecular skeleton thereof. The polar resins may be used singly, or two or more thereof may be used, provided that layer (A2) includes a polyphenylene sulfide as a polar resin.

Examples of the polyesters include: aromatic polyesters including amorphous polyesters such as polyethylene terephthalate (PET), waste PET for recycling, glycol-modified PET, acid-modified PET, polyethylene naphthalate, polytrimethylene terephthalate, and polybutylene terephthalate, and biodegradable polyesters such as polybutylene terephthalate adipate and polyethylene terephthalate succinate; lactic acid-based resins such as polycaprolactone, polyhydroxybutyrate, polyglycolic acid, and polylactic acid; and biodegradable polyesters other than these. Further, examples thereof include: liquid crystalline polyesters constituted from a wholly aromatic polyester or a semi-aromatic polyester; and polyarylates. Among these, polyethylene terephthalate, polybutylene terephthalate, polylactic acid, and liquid crystalline polyesters are preferable.

Examples of the polycarbonates include: aromatic bisphenol type polycarbonates such as bisphenol A polycarbonate and bisphenol F polycarbonate; and aliphatic polycarbonates such as polyethylene carbonate and polytrimethylene carbonate. Examples of commercially available polycarbonates include LEXAN (TM) 141R manufactured by SABIC.

Examples of the acrylic resins include acrylic-based polymers mainly comprising a structural unit derived from a (meth)acrylate. In that case, the ratio of the structural unit derived from a (meth)acrylate is preferably 50% by weight or more, more preferably 80% by weight or more in the acrylic resin. Examples of the (meth)acrylate include (meth)acrylic acid alkyl esters such as methyl (meth)acrylate, ethyl (meth)acrylate, propyl (meth)acrylate, butyl (meth)acrylate, and 2-ethylhexyl (meth)acrylate. The (meth)acrylic resin can have at least one structural unit derived from a (meth)acrylate. Moreover, if necessary, the acrylic resin may have at least one structural unit derived from an unsaturated monomer other than the (meth)acrylates. For example, the acrylic resin may have a structural unit derived from a nitrile group-containing vinyl-based monomer such as (meth)acrylonitrile preferably in a ratio of 50% by weight or less, or may have a structural unit derived from an aromatic vinyl monomer such as styrene, o-methylstyrene, m-methylstyrene, p-methylstyrene, o-chlorostyrene, m-chlorostyrene, or p-chlorostyrene preferably in a ratio of 10% by weight or less.

Examples of the polyphenylene sulfides (PPSs) include: polymers obtained by connecting aromatic rings through a sulfide bond; and branched or straight chain type polyphenylene sulfides and copolymers thereof. Specific examples of the polyphenylene sulfides include poly(paraphenylene sulfide) and poly(metaphenylene sulfide). Moreover, the PPS may be a copolymer, and examples of the copolymer include a copolymer having, in the molecule thereof, a unit such as an ether unit, a sulfone unit, a biphenyl unit, a naphthyl unit, a substituted phenyl sulfide unit, or trifunctional phenyl sulfide unit together with a unit comprising an aromatic ring and a sulfide bond. Specific examples of the copolymer include polythio-1,4-phenylene. Moreover, in the present invention, commercially available PPSs can also be used. Examples of the commercially available PPSs include Fortron (R) FX4382T1 manufactured by Ticona, and TORELINA (R) A900 manufactured by Toray Industries, Inc.

Examples of the polyphenylene oxides include poly-1,4-phenylene oxide and poly-2,6-dimethyl-1,4-phenylene oxide.

The polyether sulfone is not particularly limited as long as it is a polyether sulfone generally used for molding or films.

Examples of the polyacetals include polyformaldehyde(polyoxymethylene), polyacetaldehyde, polypropionaldehyde, and polybutyraldehyde. Among these, polyformaldehyde is particularly preferable.

In the present invention, the use of the PPS as the polar resin is preferable because a laminate having an excellent interlayer adhesive force not only at room temperature but also in a higher-temperature atmosphere than conventional adhesives for PPSs (epoxy group-containing adhesives).

In the layer (A2), the content of the polar resin is preferably 50% by mass or more, more preferably 70% by mass or more, and still more preferably 80% by mass or more.

[Composition for Adhesion, and Adhesive Layer (B) Comprising Same]

The adhesive layer (B) comprises a particular composition for adhesion described below. The composition for adhesion comprises a particular polyolefin, and the particular polyolefin preferably comprises a carbodiimide group. The polyolefin is a polyolefin obtained by reacting a polyolefin (a) having a group that reacts with a carbodiimide group and a carbodiimide group-containing compound (b). Both the polyolefin (a) and the carbodiimide group-containing compound (b) are preferably solid. The composition for adhesion has a high adhesiveness not only to polyketones and polar resins but also to polyolefins and therefore is suitable as an adhesive.

The carbodiimide group-containing compound (b) preferably has 5 or more carbodiimide groups in one molecule, more preferably 10 or more. It is to be noted that the upper limit of the number of carbodiimide groups is not particularly limited as long as the effects of the present invention are exhibited, but it is usually 30.

(Polyolefin (a))

The polyolefin (a) having a group that reacts with a carbodiimide group can be obtained by introducing a compound (m) having a group that reacts with a carbodiimide group into a polyolefin. The polyolefin (a) may be used singly, or two or more thereof may be used.

Examples of the compound (m) include a compound having active hydrogen having reactivity with a carbodiimide group. Specific examples of the compound include a compound having a group derived from a carboxylic acid, an amine, an alcohol, or a thiol. Among these, a compound having a group derived from a carboxylic acid is suitably used, and, among others, an unsaturated carboxylic acid and/or a derivative thereof are particularly preferable. Moreover, in addition to the compound having a group having active hydrogen, a compound having a group that is easily converted into a group having active hydrogen by water can also be used preferably. Specific examples of the compound include a compound having an epoxy group and a compound having a glycidyl group. The compounds (m) may be used singly, or two or more thereof may be used.

In the case where the unsaturated carboxylic acid and/or the derivative thereof is used as the compound (m), examples thereof include an unsaturated compound having one or more carboxylic acid groups and a derivative thereof, preferably an unsaturated compound having one or more carboxylic anhydride groups and a derivative thereof. Examples of the unsaturated group include a vinyl group, a vinylene group, and an unsaturated cyclic hydrocarbon group. Examples of the specific compound include: unsaturated carboxylic acids such as (meth)acrylic acid, maleic acid, fumaric acid, tetrahydrophthalic acid, itaconic acid, citraconic acid, crotonic acid, isocrotonic acid, norbornene dicarboxylic acid, and bicyclo[2.2.1]hept-2-ene-5,6-dicarboxylic acid; acid anhydrides thereof; and derivatives thereof (for example, acid halides, amides, imides, and esters). Examples of the specific acid anhydrides and derivatives include: maleic anhydride, itaconic anhydride, citraconic anhydride, tetrahydrophthalic anhydride, and bicyclo[2.2.1]hept-2-ene-5,6-dicarboxylic anhydride; malenyl chloride; malenyl imide; dimethyl maleate, monomethyl maleate, diethyl maleate, diethyl fumarate, dimethyl itaconate, diethyl citraconate, dimethyl tetrahydrophthalate, dimethyl bicyclo[2.2.1]hept-2-ene-5,6-dicarboxylate, hydroxyethyl (meth)acrylate, hydroxypropyl (meth)acrylate, glycidyl (meth)acrylate, aminoethyl (meth)acrylate, and

aminopropyl (meth)acrylate.

The unsaturated carboxylic acid and/or the derivative thereof, when used as the compound (m), may be used singly, or two or more thereof may be used. Among these, maleic anhydride, itaconic anhydride, citraconic anhydride, tetrahydrophthalic anhydride, bicyclo[2.2.1]hept-2-ene-5,6-dicarboxylic anhydride, (meth)acrylic acid, hydroxyethyl (meth)acrylate, glycidyl methacrylate, and aminopropyl methacrylate are preferable. Further, dicarboxylic anhydrides such as maleic anhydride, itaconic anhydride, citraconic anhydride, tetrahydrophthalic anhydride, and bicyclo[2.2.1]hept-2-ene-5,6-dicarboxylic anhydride are particularly preferable.

As the method of introducing the compound (m) into the polyolefin, a widely known method can be adopted, and examples thereof include a method in which the compound (m) is graft-copolymerized onto the polyolefin main chain, and a method in which an olefin and the compound (m) are radically copolymerized. Hereinafter, the case where the graft copolymerization is performed and the case where the radical copolymerization is performed will be described separately and specifically.

<Graft Copolymerization>

The polyolefin (a) having a group that reacts with a carbodiimide group can be obtained by graft-copolymerizing the compound (m) having a group that reacts with a carbodiimide group, and, if necessary, another ethylenically unsaturated monomer onto the polyolefin main chain in the presence of a radical initiator.

<<Polyolefin Main Chain>>

The polyolefin for use as the polyolefin main chain is a polymer comprising an aliphatic α-olefin having 2 to 20 carbon atoms, cyclic olefin, or nonconjugated diene as a main component, preferably an aliphatic α-olefin having 2 to 10 carbon atoms, and still preferably an aliphatic α-olefin having 2 to 8 carbon atoms as a main component. These olefins may be used singly, or two or more thereof may be used. In the case of the copolymer, the content of the olefin to be a comonomer is not particularly limited as long as the effects of the present invention are exhibited, but it is usually 50 mol% or less, preferably 40 mol% or less, and more preferably 30 mol% or less. Among the polyolefins in such a range, crystalline polyolefins such as polyethylene, polypropylene, polybutene-1, poly-4-methylpentene-1, and an α-olefin copolymer of ethylene, propylene, butene-1, or 4-methylpentene-1 with a comonomer are preferable, and polyethylene, polypropylene, or a propylene-ethylene copolymer is more preferable. Moreover, both the polyolefins having an isotactic structure and the polyolefins having a syndiotactic structure can be used, and besides, the stereoregularity is not particularly limited.

The density (measured in accordance with JIS K7112) of the polyolefin for use in the graft modification is not particularly limited as long as the effects of the present invention are exhibited, but it is usually 0.8 to 1.1 g/$cm^3$, preferably 0.8 to 1.05 g/$cm^3$, and more preferably 0.8 to 1.0 g/$cm^3$. The melt flow rate (MFR) at 230°C under a load of 2.16 kg according to ASTM D1238 is not particularly limited as long as the effects of the present invention are exhibited, but it is usually 0.01 to 500 g/10 min, preferably 0.05 to 200 g/10 min, and more preferably 0.1 to 100 g/10 min. When the density and the MFR are in these ranges, the density and the MFR of the graft copolymer after modification become about the same as those described above, and therefore handling is easy.

In addition, the degree of crystallinity of the polyolefin for use in the graft modification is not particularly limited as long as the effects of the present invention are exhibited, but it is usually 2% or more, preferably 5% or more, and more preferably 10% or more. When the degree of crystallinity is in this range, the graft copolymer after modification is excellent in handling.

The number average molecular weight (Mn) of the polyolefin for use in the graft modification, measured by gel permeation chromatography (GPC), is preferably 5000 to 500000, more preferably 10000 to 100000. When the number average molecular weight (Mn) is in this range, the polyolefin is excellent in handling. It is to be noted that, in the ethylene-based polyolefins, the number average molecular weight can be determined in terms of polyethylene when the amount of the comonomer is 10 mol% or less, or in terms of ethylene-propylene (based on ethylene content of 70 mol%) when the amount of the comonomer is 10 mol% or more.

The polyolefin for use in the graft modification can be manufactured by any of conventionally known methods, and an olefin can be polymerized using, for example, a titanium-based catalyst, a vanadium-based catalyst, or a metallocene-based catalyst. In addition, the polyolefin for use in the graft modification may be in any form of a resin and an elastomer, both the polyolefin having an isotactic structure and the polyolefin having a syndiotactic structure can be used, and besides, the stereoregularity in not particularly limited. Commercially available resins can also be utilized as they are.

<<Graft Polymerization Method>>

The method of grafting the compound (m) onto the polyolefin main chain is not particularly limited, and conventionally known graft polymerization methods such as a solution method and a melt-kneading method can be adopted.
The amount of the compound (m) grafted is usually 0.05 to 20% by weight, preferably 0.05 to 10% by weight, more preferably 0.05 to 5% by weight, and still more preferably 0.05 to 3% by weight when the amount of the polyolefin (a) is assumed to be 100% by weight. It is to be noted that the amount of the compound (m) grafted is a net amount grafted which is measured after the free compound (m) is removed from the polyolefin (a). In addition, the amount grafted can be measured by a publicly known method such as $^{13}C$-NMR or $^{1}H$-NMR measurement. Further, in the case where a monomer having an acidic functional group, such as an unsaturated carboxylic acid and an acid anhydride thereof, is used as the compound (m), for example, an acid value can also be used as a standard of the amount of the functional groups to have been introduced into the polyolefin (a). Further, in the case where maleic anhydride is used as the compound (m), the amount grafted can also be determined based on an absorption spectrum of a carbonyl group in maleic anhydride usually detected at around 1780 to 1790 $cm^{-1}$ using an infrared spectrophotometer.

<Radical Copolymerization>

The polyolefin (a) having a group that reacts with a carbodiimide group can also be obtained by radically copolymerizing an olefin and the compound (m) having a group that reacts with a carbodiimide group. As the olefin, an olefin that is the same as the above-described olefin in the case where the polyolefin to be used as the polyolefin main chain is formed can be adopted. The method of copolymerizing the olefin and the compound (m) is not particularly limited, and conventionally known radical copolymerization methods can be adopted.

(Constitution of Polyolefin (a))

The amount derived from the compound (m) having a group that reacts with a carbodiimide group in the polyolefin (a) having a group that reacts with a carbodiimide group (example: amount of structural unit, the amount grafted) is usually 0.05 to 20% by weight, preferably 0.05 to 5% by weight, and more preferably 0.05 to 3% by weight. It is preferable that the amount derived from the compound (m) having a group that reacts with a carbodiimide group be in the above range because the polyolefin (a) and the carbodiimide group-containing compound (b) are suitably crosslinked to enable manufacture of the composition for adhesion. When the amount falls below the above range, the adhesive force may be insufficient.
In addition, the density (measured in accordance with JIS K7112) of the polyolefin (a) having a group that reacts with a carbodiimide group is usually 0.870 to 0.940 $g/cm^3$, preferably 0.875 to 0.940 $g/cm^3$, and more preferably 0.880 to 0.940 $g/cm^3$.

(Carbodiimide Group-Containing Compound (b))

The carbodiimide group-containing compound (b) is, for example, a polycarbodiimide having a repeating unit represented by formula (2). The carbodiimide group-containing compound (b) may be used singly, or two or more thereof may be used.
[Formula 2]

$$-N=C=N-R_1 \text{------} \qquad (2)$$

In formula (2), $R_1$ represents a divalent organic group having 2 to 40 carbon atoms.
The polycarbodiimide can be manufactured by subjecting an organic diisocyanate such as an aliphatic diisocyanate, an aromatic diisocyanate, or an alicyclic diisocyanate to a decarboxylation condensation reaction without a solvent or in an inert solvent in the presence of a condensation catalyst. For example, the diisocyanates such as hexamethylene diisocyanate, 4,4-dipenylmethane diisocyanate, 1,4-phenylene diisocyanate, 2,4-tolylene diisocyanate, xylylene diisocyanate, cyclohexane-1,4-diisocyanate, dicyclohexylmethane-4,4'-diisocyanate, and isophorone diisocyanate are used singly, or a plurality of the diisocyanates are mixed and used. The degree of polymerization of the polycarbodiimide can be adjusted by selecting the catalyst, the reaction temperature, and the terminal-blocking agent in the decarboxylation condensation reaction. The polycarbodiimide having a degree of polymerization of usually 2 to 40, preferably 4 to 20 is used. As the terminal-blocking agent, for example, monoisocyanates such as phenyl isocyanate, tolyl isocyanate, and naphthyl isocyanate; and active hydrogen-containing compounds such as methanol, ethanol, diethylamine, cyclohexylamine, succinic acid, benzoic acid, and ethyl mercaptan can be used. As the condensation catalyst, for example, alcoholates of titanium, hafnium, zirconium, sodium, and calcium; and organic phosphorus compounds

such as phospholene oxide can be used.

The number average molecular weight (Mn) of the carbodiimide group-containing compound (b) in terms of polystyrene, determined by gel permeation chromatography (GPC), is not particularly limited as long as the effects of the present invention are exhibited, but it is usually 400 to 500,000, preferably 700 to 10,000, more preferably 1,000 to 8,000, and still more preferably 1,000 to 4,000. It is preferable that the number average molecular weight (Mn) be in this range because the composition for adhesion has an excellent adhesive force.

The carbodiimide group-containing compound (b) may comprise monocarbodiimide in the polycarbodiimide, and a single compound can be used, or a plurality of compounds can be mixed and used.

In the present invention, a commercially available carbodiimide group-containing compound can also be used as it is. Examples of the commercially available carbodiimide group-containing compound include CARBODILITE (R) HMV-8CA and HMV-15CA, and CARBODILITE (R) LA1, all manufactured by Nisshinbo Chemical Inc.

Further, in the present invention, as the number of carbodiimide groups in one molecule of the carbodiimide group-containing compound (b) becomes large, the number of reaction sites of the polar resin and the resin such as the polyketone in the adhesive layer (B) is increased more, and therefore the layer (A) and the layer (B) can be allowed to adhere to each other more firmly. As can be seen from this, the carbodiimide group-containing compound (b) having 5 or more carbodiimide groups in one molecule is preferably used, and the carbodiimide group-containing compound (b) having 10 or more carbodiimide groups in one molecule is more preferably used. It is to be noted that the upper limit of the number of carbodiimide groups in one molecule is not limited as long as the effects of the present invention are exhibited, but it is preferable that the upper limit be 30 because when the number of carbodiimide groups in one molecule is increased, a crosslinked structure through the carbodiimide group-containing compound (b) is liable to be formed to deteriorate moldability.

The content of the carbodiimide group in the carbodiimide group-containing compound (b) can be measured by $^{13}C$-NMR, IR, or a titration method, and can be grasped as a carbodiimide group equivalent. A peak can be observed at 130 to 142 ppm in $^{13}C$-NMR and at 2130 to 2140 $cm^{-1}$ in IR.

The $^{13}C$-NMR measurement is performed, for example, in the following manner. That is, 0.35 g of a sample is dissolved by heating in 2.0 ml of hexachlorobutadiene. This solution is filtrated with a glass filter (G2), 0.5 ml of deuterated benzene is then added to the solution, and the resultant solution is charged into an NMR tube having an inner diameter of 10 mm. The $^{13}C$-NMR measurement is performed at 120°C using a GX-500 type NMR measurement apparatus manufactured by JEOL Ltd. The cumulative number is set to 10,000 or more.

(Method for Preparing Polyolefin)

The polyolefin preferably having a carbodiimide group is obtained by reacting the polyolefin (a) having a group that reacts with a carbodiimide group and the carbodiimide group-containing compound (b) preferably at 230°C or higher. The composition for adhesion comprising a polyolefin can be obtained specifically by performing melt-kneading such as melt-modification, but the method for preparing the polyolefin is not limited to this method.

Hereinafter, an example in the case where the melt-kneading is performed will be given. The reaction method is not particularly limited, and examples thereof include a method in which the polyolefin (a) and the carbodiimide group-containing compound (b) are charged, for example, into a Henschel mixer, a V-type blender, a tumbler blender, or a ribbon blender to be mixed, and the resultant mixture is then melt-kneaded with a single-screw extruder, a multi-screw extruder, a kneader, or a Banbury mixer. Among these, an apparatus that is excellent in kneading performance, such as a multi-screw extruder, a kneader, or a Banbury mixer, is preferably used because the composition for adhesion in which respective components are further uniformly dispersed/reacted can be obtained.

Any of the method in which the polyolefin (a) and the carbodiimide group-containing compound (b) are mixed in advance and the resultant mixture is then supplied from a hopper and the method in which some component or components are supplied from a hopper and the other components are supplied from a supply port installed at an arbitrary part between the vicinity of the hopper and the tip of an extruder can be adopted.

Reaction can be performed at a temperature equal to or higher than the highest melting point among the melting points of the respective components to be mixed, and specifically, the temperature in melt-kneading the respective components is usually in a range of 180 to 320°C, preferably in a range of 230 to 300°C, and more preferably in a range of 235 to 280°C.

The content of the carbodiimide group in the composition for adhesion is 0.1 to 50 mmol, preferably 0.2 to 40 mmol, and more preferably 0.5 to 30 mmol per 100 g of the composition for adhesion. It is preferable that the content be in this range because the composition for adhesion has an excellent adhesiveness, and the crosslinking of the polyolefin (a) through the carbodiimide group-containing compound (b) can be suppressed.

The content of the carbodiimide group in the composition for adhesion can be calculated from the amount of the carbodiimide group-containing compound (b) charged, and in addition, can be measured by $^{13}C$-NMR, IR, or a titration method, making it possible to be grasped as a carbodiimide group equivalent. A peak can be observed at 130

to 142 ppm in $^{13}$C-NMR and at 2130 to 2140 $cm^{-1}$ in IR. It is to be noted that the $^{13}$C-NMR measurement is performed, for example, by the measurement method described in the method for measuring the carbodiimide group content in the carbodiimide group-containing compound (b).

In addition, the composition for adhesion is manufactured by reacting the carbodiimide group (NCN) in the carbodiimide group-containing compound (b) with the group that reacts with the carbodiimide group in the polyolefin (a), as described above, but the carbodiimide group to a certain extent is consumed in the process of the reaction, and the residue of the carbodiimide group connected to a polyolefin group as the same molecular chain contributes to the adhesiveness with the polyketone or the polar resin. When the content of the carbodiimide group exceeds the above-described range, a free carbodiimide group in an excessive amount relative to the amount of the polyolefin (a) having a group that reacts with a carbodiimide group exists in the composition for adhesion to deteriorate the adhesive performance and moldability.

In addition, the rate of reaction between the polyolefin (a) and the carbodiimide group-containing compound (b) can be evaluated according to the method described below.

A hot-pressed sheet is prepared for each of the polyolefin (a) (reference) having a group that reacts with a carbodiimide group and the composition for adhesion comprising a polyolefin preferably comprising a carbodiimide group, and thereafter the infrared absorption is measured using an infrared absorption-analyzing apparatus. From the obtained charts, the rate of reaction can be calculated using the following expression ($\alpha$1) by comparing the absorbance derived from the group that reacts with a carbodiimide group in the polyolefin (a) with the difference between the absorbance derived from the group that reacts with a carbodiimide group in the polyolefin (a) and the absorbance derived from the group that reacts with a carbodiimide group in the composition for adhesion. It is to be noted that when a group derived from maleic anhydride is used as the group that reacts with a carbodiimide group, the absorbance at around 1790 $cm^{-1}$ can be used.

$$\text{Rate of reaction (\%)} = \{X/Y\}*100 \text{ ... Expression } (\alpha 1)$$

X = difference between absorbance derived from group that reacts with carbodiimide group in polyolefin (a) and absorbance derived from group that reacts with carbodiimide group in composition for adhesion
Y = absorbance derived from group that reacts with carbodiimide group in polyolefin (a)

The rate of reaction determined by the above-described method for the composition for adhesion is usually in a range of 40 to 100%, preferably in a range of 60 to 100%, and more preferably in a range of 80 to 100%.

Further, the density (measured in accordance with JIS K7112) of the composition for adhesion is 0.870 to 0.940 g/$cm^3$, preferably 0.875 to 0.940 g/$cm^3$, and more preferably 0.880 to 0.940 g/$cm^3$. It is preferable that the density be in the above-described range because the stable productivity, the moldability, and the adhesiveness are good.

The melt flow rate (MFR, in accordance with ASTM D1238, 230°C, load of 2.16 kg) of the composition for adhesion is not particularly limited as long as the effects of the present invention are exhibited, but it is usually 0.01 to 500 g/10 min, preferably 0.01 to 200 g/10 min, more preferably 0.05 to 200 g/10 min, still more preferably 0.05 to 150 g/10 min, and particularly preferably 0.1 to 150 g/10 min.

It is to be noted that the carbodiimide group is changed into a urea group due to water absorption; however, the urea group also exhibits a high reactivity with the polyketone or the polar resin. Accordingly, the composition for adhesion may contain a polyolefin in which the carbodiimide group has been converted into a urea group, for example, due to water in the air, and such a composition for adhesion is one of the preferred embodiments.

(Additive and the Like)

The composition for adhesion comprises a polyolefin obtained by reacting the polyolefin (a) and the carbodiimide group-containing compound (b), and may comprise within a range where the object of the present invention is impaired a resin that is different from the polyolefin (a) and the polyolefin preferably having a carbodiimide group. Examples of such a resin include an unmodified polyolefin, and besides, a modified resin having a group that reacts with a carbodiimide group, and, for example, a maleic acid-modified resin and an imine-modified resin are included. Moreover, the composition for adhesion may comprise an unreacted polyolefin (a). These resins may be used singly, or two or more thereof may be used.

In addition, publicly known additives used in the field of polyolefins, such as, for example, a tackifier, a process stabilizer, a heat stabilizer, an anti-heat aging agent, and a filler can also be added to the composition for adhesion. In one embodiment (for example, in the case where the second laminate is constituted), a tackifier in particular is preferably blended in the composition for adhesion for the purpose of imparting the adhesiveness. Examples of the tackifier include rosin derivatives, terpene resins, petroleum resins, and hydrogenated products thereof, and among these, hydrogenated

terpene resins and hydrogenated petroleum resins are preferable. The tackifier is not particularly limited as long as the effects of the present invention are exhibited, and, for example, the tackifier is preferably blended in a ratio of 0 to 30% by weight based on 100% by weight of the composition for adhesion.

[Layer (C) Comprising Another Resin Other Than Polyketone]

The layer (C) comprising another resin other than a polyketone is a layer other than the layer (A1) and the adhesive layer (B) and comprises another resin other than a polyketone and the composition for adhesion. The another resin is not particularly limited as long as the effects of the present invention are exhibited, and examples thereof include polyolefins, polylactic acids, polycarbonates, polyesters, polyamides, and ethylene/vinyl alcohol copolymers. The another resins may be used singly, or two or more thereof may be used. It is to be noted that the polyketone can refer to the polyketone for the layer (A1).

In the present invention, a polyolefin layer is suitably used as the layer (C). The adhesive layer (B) is particularly suitable for adhesion between the polyolefin layer and the polyketone layer.

The polyolefin layer comprises a polyolefin. Examples of the polyolefin include a homopolymer or a copolymer comprising an α-olefin having 2 to 20 carbon atoms. The polyolefins may be used singly, or two or more thereof may be used. Examples of the α-olefin include ethylene, propylene, 1-butene, 4-methyl-1-pentene, 1-hexene, and 1-octene. In addition, another monomer other than an α-olefin may be copolymerized in a small amount, for example, an amount of 10 mol% or less, in the polyolefin. The another monomer is not particularly limited, and examples thereof include a monomer having a polar group (such as, for example, carbonyl group, hydroxy group, and ether-binding group) and a polymerizable carbon-carbon double bond in the molecule.

Specific examples of the polyolefin include homopolymers and copolymers such as (1) an ethylene homopolymer (production method may be any of low-pressure method and high-pressure method), (2) an ethylene-propylene copolymer of 99 to 80 mol% of ethylene and 1 to 20 mol% of propylene, preferably an ethylene-propylene copolymer of 95 to 85 mol% of ethylene and 5 to 15 mol% of propylene, (3) an ethylene-1-butene copolymer of 99 to 80 mol% of ethylene and 1 to 20 mol% of 1-butene, preferably an ethylene-1-butene copolymer of 95 to 85 mol% of ethylene and 5 to 15 mol% of 1-butene, (4) an ethylene-1-octene copolymer of 99 to 80 mol% of ethylene and 1 to 20 mol% of 1-octene, preferably an ethylene-1-octene copolymer of 97 to 85 mol% of ethylene and 3 to 15 mol% of 1-octene, (5) an ethylene-based copolymer such as a copolymer of ethylene and 10 mol% or less of another α-olefin (excluding propylene, 1-butene, and 1-octene) or a vinyl monomer (such as, for example, vinyl acetate and ethyl acrylate), (6) a propylene homopolymer, (7) a random copolymer of propylene and 30 mol% or less of another α-olefin, preferably a random copolymer of propylene and 20 mol% or less of another α-olefin, (8) a block copolymer of propylene and 40 mol% or less of another α-olefin, (9) a 1-butene homopolymer, (10) a random copolymer of 1-butene and 10 mol% or less of another α-olefin, (11) 4-methyl-1-pentene homopolymer, and (12) a random copolymer of 4-methyl-1-pentene and 20 mol% or less of another α-olefin.

Among these, homopolymers and copolymers such as (2) an ethylene-propylene copolymer of 95 to 85 mol% of ethylene and 5 to 15 mol% of propylene, (3) an ethylene-1-butene copolymer of 95 to 85 mol% of ethylene and 5 to 15 mol% of 1-butene, (4) an ethylene-1-octene copolymer of 97 to 85 mol% of ethylene and 3 to 15 mol% of 1-octene, (5) an ethylene-based copolymer such as a copolymer of ethylene and 10 mol% or less of another α-olefin (excluding propylene, 1-butene, and 1-octene) or a vinyl monomer (such as, for example, vinyl acetate and ethyl acrylate), (6) a propylene homopolymer, (7) a random copolymer of propylene and 20 mol% or less of another α-olefin, and (8) a block copolymer of propylene and 40 mol% or less of another α-olefin are preferable.

In the layer (C), the content of the another resin other than a polyketone is preferably 50% by mass or more, more preferably 70% by mass or more, and still more preferably 80% by mass or more.

[Constitution of Laminate]

The laminate according to the present invention comprises: a layer (A) comprising a resin not having active hydrogen in the main molecular skeleton thereof; and an adhesive layer (B) being at least in partial contact with the layer (A) and comprising a composition for adhesion, and the laminate according to the present invention may have any kind of layer constitution as long as this requirement is satisfied.

The thickness of the layer (A) is usually 0.005 to 3 mm, preferably 0.01 to 0.5 mm. The thickness of the adhesive layer (B) is usually 0.005 to 3 mm, preferably 0.01 to 0.5 mm.

In addition, the laminate according to the present invention may be manufactured by any manufacturing method. Examples of the molding method include publicly known molding methods such as a laminate molding method, a co-extrusion molding method, a blow molding method, and a co-injection molding method. Among these, the laminate molding method or the co-extrusion molding method is preferable in terms of interlayer adhesive force.

For example, the laminate can also be manufactured by a publicly known laminate molding method such as a

method in which the composition for adhesion and the resin composition comprising a resin not having active hydrogen in the main molecular skeleton thereof are separately molded (for example, into sheet or film form) in advance, and then these layers are simultaneously subjected to thermocompression bonding by being brought into contact with each other (so-called heat lamination method). The heat lamination method includes a method of sticking the layers together using a hot press and a method of continuously sticking the layers together using a heat roll.

Moreover, as for a method for continuously molding the laminate, the laminate can be manufactured in such a way that the resin not having active hydrogen in the main molecular skeleton thereof is melted and laminated in the melt state through the melt composition for adhesion by a publicly known molding method such as a co-extrusion molding method, a blow molding method, or a co-injection molding method. The co-extrusion method includes a T-die method using a flat die and an inflation method using a circular die, but any of the methods can be adopted. As the flat die, either a single manifold or multi-manifold form using a black box may be used. Further, with respect to the die for use in the inflation method, any of publicly known dies can be used.

The temperature in allowing the resin composition comprising a resin not having active hydrogen in the main molecular skeleton thereof and the composition for adhesion to adhere to each other is preferably 260°C or higher, more preferably 280°C or higher. It is to be noted that the upper limit of the temperature is, for example, 370°C, though not limited thereto.

The resin composition comprising a resin not having active hydrogen in the main molecular skeleton thereof may comprise a resin other than the above described resins or a conventionally known additive within a range where the object of the present invention is impaired. Examples of the additive include the additives given as an example of an arbitrary component in the composition for adhesion.

The laminate according to the present invention has a high interlayer adhesive force between the layer (A) and the adhesive layer (B) and is a particularly excellent in terms of the interlayer adhesive force not only at normal temperature but also in a high-temperature atmosphere. Moreover, the laminate is excellent in terms of the interlayer adhesive force even after being subjected to a hydrothermal treatment and also has a high hydrothermal resistance.

The application of the laminate according to the present invention is not particularly limited, and the laminate according to the present invention can be used, for example, in food packaging material application such as food containers and beverage containers, drug packaging material application such as cosmetic bottles and shampoo bottles, industrial material application such as automobile parts, fuel pipes, gas pipes, warm-water pipes, ink tubes, and liquid transport tubes, building material application such as decorative sheets, and other applications.

[Constitution of First Laminate and Method for Manufacturing First Laminate]

The first laminate according to the present invention comprises: a layer (A1) comprising a polyketone; and an adhesive layer (B) being at least in partial contact with the layer (A1) and comprising a composition for adhesion. The first laminate is preferably a laminate obtained by laminating a layer (C) comprising another resin other than a polyketone, preferably a polyolefin layer, and the layer (A1) through the adhesive layer (B), more preferably a laminate having a three-layered structure with three types of layers of (A1)/(B)/(C), and a laminate having a five-layered structure with three types of layers of (A1)/(B)/(C)/(B)/(A1) or (C)/(B)/(A1)/(B)/(C), wherein the notation of layer is abbreviated; however, the first laminate according to the present invention is not limited to these.

The thickness of the layer (A1) is usually 0.005 to 3 mm, preferably 0.01 to 0.5 mm. The thickness of the adhesive layer (B) is usually 0.005 to 3 mm, preferably 0.01 to 0.5 mm. The thickness of the layer (C) is usually 0.01 to 100 mm, preferably 0.03 to 2 mm. The thickness of the laminate having a three-layered structure with three types of layers of (A1)/(B)/(C) is usually 0.02 to 106 mm, preferably 0.05 to 3 mm. In the case where a plurality of layers exists for each of (A1) to (C), the above-described thicknesses can be referred to as the thickness of each layer.

Up to now, a polyolefin obtained in such a way that a maleic anhydride-modified polyolefin is further modified by a carbodiimide has been used as an adhesive, and the carbodiimide-modified polyolefin exhibits a good adhesiveness to adherends having active hydrogen at the surface thereof. However, the carbodiimide itself does not have active hydrogen, and therefore it has been anticipated that adhesion of a polyketone and a carbodiimide-modified polyolefin is difficult (for example, paragraph [0053] in International Publication No. WO 2007040261). In the present invention, it has been made clear that by allowing the carbodiimide-modified polyolefin (composition for adhesion) and the polyketone to adhere to each other under a high-temperature condition, preferably 260°C or higher, a further firm adhesiveness is exhibited. It is to be noted that the upper limit of the temperature is, for example, 370°C, though not particularly limited thereto.

For example, the laminate having a three-layered structure with three types of layers of (A1)/(B)/(C) can be manufactured by the molding method as follows.

The laminate can be manufactured in such a way that the polyketone, the composition for adhesion, and the another resin other than a polyketone, such as a polyolefin, are melted with separate extruders, and then supplied into a die having a three-layered structure to be subjected to co-extrusion molding so that the composition for adhesion is

molded into an intermediate layer.

Moreover, the laminate can also be manufactured by a publicly known lamination method such as a method in which the layer (A1) and the layer (C1) are molded in advance, and the composition for adhesion is subjected to melt extrusion between the layer (A1) and the layer (C) (so-called sandwich lamination method) or a method in which the layer (A1), the layer (B), and the layer (C) are separately molded in advance, and these layers are simultaneously subjected to thermocompression bonding (so-called heat lamination method).

Further, the laminate can also be manufactured by a so-called co-injection molding method in which the polyketone, the composition for adhesion, and the another resin other than a polyketone, such as a polyolefin, are melted with separate extruders, and then injected into a metal mold at the same time or at different timing.

The molding temperature is not particularly limited as long as the composition for adhesion (carbodiimide-modified polyolefin) and the polyketone are allowed to adhere to each other using a publicly known molding method under a high-temperature condition, preferably at an adhesion temperature of 260°C or higher, more preferably 280°C or higher, and the molding temperature may be different according to various conditions such as the molding method, the molding process, and the kind of raw material (resin and composition). When the adhesiveness between the composition for adhesion and the polyketone and the physical properties of the laminate as a whole are taken into consideration, the molding temperature for the composition for adhesion is usually 260°C or higher, preferably at a temperature exceeding 260°C, and more preferably 280°C or higher, and the molding temperature for the polyketone is appropriately determined at a temperature equal to or higher than the melting point of the polyketone considering the fluidity and various molding conditions, but it is usually 280°C or lower, preferably 260°C or lower. It is to be noted that the upper limits of these temperatures are, for example, 370°C, though not particularly limited thereto.

[Constitution of Second Laminate and Method for Manufacturing Second Laminate]

The second laminate according to the present invention comprises: a layer (A2) comprising a polyphenylene sulfide as a polar resin; and an adhesive layer (B) being at least in partial contact with the layer (A2) and comprising a composition for adhesion, and specifically is a multi-layered laminate comprising a structure in which at least the composition for adhesion and the polar resin are allowed to adhere to each other and laminated. The second laminate according to the present invention may have any kind of layer constitution as long as this requirement is satisfied.

Examples of the layer constitution of the laminate include polar resin/adhesive, adhesive/polar resin/adhesive, polar resin/adhesive/polar resin, adhesive/polar resin/adhesive/polyolefin, and polyolefin/adhesive/polar resin/adhesive/polyolefin, wherein the notation of layer is abbreviated, and the composition for adhesion is written as adhesive. In the constitution of polar resin/adhesive/polar resin, laminate in which the polar resin on the left side is specified is PPS/adhesive/polar resin.

The thickness of the layer (A2) is usually 0.005 to 3 mm, preferably 0.01 to 0.5 mm. The thickness of the adhesive layer (B) is usually 0.005 to 3 mm, preferably 0.01 to 0.5 mm. The thickness of the layer on the side opposite to the layer (A2) through the adhesive layer (B) is usually 0.01 to 100 mm, preferably 0.03 to 2 mm. The thickness of the laminate having a three-layered structure is usually 0.02 to 106 mm, preferably 0.05 to 3 mm.

The molding temperature is not particularly limited as long as the composition for adhesion (carbodiimide-modified polyolefin) and the polar resin are allowed to adhere to each other using a publicly known molding method under a high-temperature condition, and the molding temperature may be different according to various conditions such as the molding method, the molding process, and the kind of raw material (resin and composition). The molding temperature for the composition for adhesion is usually 260°C or higher, preferably 280°C or higher, and the molding temperature for the polar resin is appropriately determined at a temperature equal to or higher than the melting point of the polar resin considering the fluidity and various molding conditions.

Examples

Hereinafter, the present invention will be described more specifically giving Examples and Comparative Examples, but the present invention is not limited to these Examples. The term "part(s) by mass" is represented by the term "part(s)" unless otherwise noted.

[Various Measurement Methods]

In the present Examples, measurement was performed according to the following methods.

[Melt Flow Rate (MFR)]

Measurement was performed at 230°C under a load of 2.16 kg according to ASTM D1238.

[Density]

The density was measured in accordance with JIS K7112.

[Number Average Molecular Weight of Carbodiimide Group-Containing Compound]

The number average molecular weight of the carbodiimide group-containing compound was measured using gel permeation chromatography (GPC) with a tetrahydrofuran solvent (mobile phase) at a column temperature of 40°C (in terms of polystyrene, Mw: weight average molecular weight, Mn: number average molecular weight). As standard polystyrene having a molecular weight of $580 \leq Mw \leq 7*10^6$, polystyrene PS-1 manufactured by Agilent Technologies, Inc. (former Polymer Laboratories Limited) was used.

[Content of Carbodiimide Group]

The content of the carbodiimide group in Examples and Comparative Examples was calculated from the amount of the carbodiimide group-containing compound charged.

[Amount of Maleic Anhydride Grafted]

The amount of maleic anhydride grafted was measured using FT-IR by the following method. A sample was hot-pressed at 250°C for 3 minutes to prepare a sheet, and an infrared absorption spectrum at around 1790 $cm^{-1}$ was then measured by a transmission method using an infrared spectrophotometer (FT-IR 410 type, manufactured by JASCO Corporation). As the measurement condition, the resolution was 2 $cm^{-1}$, and the cumulative number was set to 32.

[Rate of Reaction (%)]

The rate of reaction (%) was calculated by the above-described expression ($\alpha$1) using the amounts of maleic anhydride grafted, which were measured by FT-IR for the composition for adhesion and the polyolefin (a) (absorbance derived from maleic anhydride group in composition for adhesion and absorbance derived from maleic anhydride group in polyolefin (a)).

[Interlayer Adhesive Force]

Obtained laminates were cut out so as to have a width of 15 mm to measure the adhesive force at an interface between the polyketone layer and the CDI-PP1 layer or the adhesive force at an interface between the polyketone layer and the MAH-PP-2 layer using a tension tester (IM-20ST type manufactured by INTESCO co., ltd.) by a T-peel method at a room temperature of 23°C and at 100°C. Further, the obtained laminates were immersed in hot water of 121°C for 30 minutes for the purpose of evaluating the hydrothermal resistance to thereafter measure the adhesive force at the interface between the polyketone layer and the CDI-PP1 layer or the adhesive force at the interface between the polyketone layer and MAH-PP-2 layer in an atmosphere of a room temperature of 23°C.

Moreover, the obtained laminates were cut out so as to have a width of 15 mm to measure the adhesive force at an interface between the PPS layer and the adhesive layer such as the CDI-PP1b layer using the tension tester by the T-peel method at a room temperature of 23°C, at 80°C, and at 100°C. Further, evaluation of the hydrothermal resistance was performed by the same method as described above.

Furthermore, the obtained laminates were cut out so as to have a width of 15 mm to measure the adhesive force at an interface between the polycarbonate layer and the CDI-PP1 layer, the MAH-PE layer, or the MAH-PP-2 layer using the tension tester by the T-peel method at a room temperature of 23°C and at 100°C. Further, evaluation of the hydrothermal resistance was performed in the same method as described above.

The crosshead speed was set at 300 mm/min.

The unit of the adhesive force (interlayer adhesive force, peel strength) is N/15 mm.

[Materials Used]

Materials used in Examples and Comparative Examples are shown below. It is to be noted that a commercially available product was used for any of the polyolefins used unless otherwise noted.

(1) PP-1: polypropylene (random PP, MFR = 7 g/10 min, density = 0.910 $g/cm^3$, manufactured by Prime Polymer Co., Ltd.)

(2) PP-2: polypropylene (homo PP, MFR = 3 g/10 min, density = 0.910 g/cm$^3$, manufactured by Prime Polymer Co., Ltd.)

(3) MAH-PP-2: maleic anhydride-modified polypropylene (MFR = 6 g/10 min, density = 0.890 g/cm$^3$, amount of maleic anhydride grafted = 0.15% by weight, manufactured by Mitsui Chemicals, Inc.)

(4) HMV-8CA: carbodiimide group-containing compound (trade name CARBODILITE (R) HMV-8CA, manufactured by Nisshinbo Chemical Inc., carbodiimide group equivalent of 278, number average molecular weight of 2100, number of carbodiimide groups in one molecule of 9)

(5) HMV-15CA: carbodiimide group-containing compound (trade name CARBODILITE (R) HMV-15CA, manufactured by Nisshinbo Chemical Inc., carbodiimide group equivalent of 262, number average molecular weight of 3050, number of carbodiimide groups in one molecule of 12)

(6) Ethylene-GMA copolymer: ethylene-glycidyl methacrylate (GMA) copolymer (Lotader AX8840 manufactured by ARKEMA, MFR = 10 g/10 min, density = 0.940 g/cm$^3$)

(7) MAH-PE: maleic anhydride-modified ethylene-$\alpha$-olefin random copolymer (MFR = 9.0 g/10 min, density = 0.900 g/cm$^3$, amount of maleic anhydride grafted = 0.2%, manufactured by Mitsui Chemicals, Inc.)

[Twin-Screw Kneader]

In the examples below, a twin-screw kneader "TEX-30" (L/D = 40, using vacuum vent) manufactured by THE JAPAN STEEL WORKS, LTD. was used.

[Manufacture Example 1]

<Manufacture of Polyolefin (a) Having Group That Reacts with Carbodiimide Group>

In 100 parts of PP-1, 1 part of maleic anhydride (manufactured by Wako Pure Chemical Industries, Ltd., hereinafter, abbreviated as MAH) and 0.25 parts of 2,5-dimethyl-2,5-bis(tert-butylperoxy)hexyne-3 (trade name PERHEXYN (R) 25B, manufactured by NOF CORPORATION) were mixed, and the resultant mixture was extruded using the twin-screw kneader at a cylinder temperature of 220°C, a screw speed of 200 rpm, and a discharge quantity of 80 g/min to obtain maleic anhydride-modified polypropylene (hereinafter, abbreviated as MAH-PP-1). The MAH-PP-1 had a density of 0.915 g/cm$^3$.

The obtained MAH-PP-1 was dissolved in xylene, and the obtained xylene solution was subsequently poured into acetone to reprecipitate and purify the MAH-PP-1. The amount of maleic anhydride grafted, when measured by FT-IR, was found to be 0.7% by weight.

[Example AA1 and Comparative Example AA1]

<Manufacture of Composition for Adhesion>

The MAH-PP-1 manufactured above in an amount of 100 parts and the carbodiimide group-containing compound HMV-8CA in an amount of 1.7 parts were mixed, and the resultant mixture was extruded using the twin-screw kneader at a cylinder temperature of 250°C, a screw speed of 200 rpm, and a discharge quantity of 80 g/min to manufacture a pellet of a composition for adhesion (hereinafter, abbreviated as CDI-PP1) .

The obtained CDI-PP1 had an MFR (230°C, load of 2.16 kg) of 130 g/10 min, a density of 0.915 g/cm$^3$, and a carbodiimide group content calculated from the amount of the carbodiimide group-containing compound charged of 6 mmol/100 g. It is to be noted that a peak (1790 cm$^{-1}$) of maleic anhydride disappeared from the CDI-PP1 according to the FT-IR analysis, so that the ratio of the difference (X) between the absorbance derived from the group that reacts with the carbodiimide group in the polyolefin (a) and the absorbance derived from the group that reacts with the carbodiimide group in the CDI-PP1 to the absorbance (Y) derived from the group that reacts with the carbodiimide group in the polyolefin (a) is 1, and therefore the rate of reaction was 100%.

<Manufacture of Laminates>

Laminates of PP-2/CDI-PP1/polyketone/CDI-PP1/PP-2 as Example AA1 and PP-2/MAH-PP-2/polyketone/MAH-PP-2/PP-2 as Comparative Example AA1 were prepared by co-extrusion molding using a molding machine (manufactured by EDI) for molding a five-layered T-die cast sheet consisting of four types of layers. As the polyketone, AKROTEK: PK-HM), product name, manufactured by AKRO-PLASTIC GmbH, was used. The extruder for the PP-2 layer was 50 mm$\phi$, and the temperature was set at 230°C; the extruder for the CDI-PP1 or MAH-PP-2 layer was 40 mm$\phi$, and the temperature was set at 280°C; and the extruder for the polyketone layer was 30 mm$\phi$, and the temperature

was set at 260°C, the temperature at the die part was set at 280°C, and taking-off was performed at 1 m/min. The thickness of each layer was set as PP-2/CDI-PP1 or MAH-PP-2/polyketone/CDI-PP1 or MAH-PP-2/PP-2 = 350/100/150/100/350 (μm).

<Evaluation of Interlayer Adhesive Force of Laminates>

The interlayer adhesive force of the laminates manufactured above was evaluated. The results are shown in Table 1.

[Table 1]

Table 1

| | | Example AA1 | Comparative Example AA1 |
|---|---|---|---|
| Interlayer adhesive force (23°C) | N/15 mm | 36 | 5 |
| Interlayer adhesive force (100°C) | N/15 mm | 18 | 0.7 |
| Interlayer adhesive force (after immersion in hot water) | N/15 mm | 20 | 1 |

[Example AA2 and Comparative Example AA2]

<Preparation of Sheets>

A sheet of the polyketone (product name AKROTEK: PK-HM), a sheet of the CDI-PP1, and a sheet of the MAH-PP-2 were separately prepared using an automatic press molding machine (NSF 50, manufactured by SHINTO Metal Industries Corporation) according to the method described below.

Iron plate (3 mm)/aluminum plate (0.2 mm)/polyfluroethylene sheet (0.3 mm)/metal frame (0.5 mm)/polyfluroethylene sheet (0.3 mm)/aluminum plate (0.2 mm)/iron plate (3 mm) were stacked in the mentioned order, and a pellet of the polyketone, the CDI-PP1, or the MAH-PP-2 was spread all over the inside of the metal frame to prepare a molding unit. The molding unit was installed in the automatic press molding machine in which the heating temperature was set at heating temperature (1), and heating for preliminary heating time (2) was performed without pressurization, and heating for heating time (3) was then performed under pressure of a surface pressure of 4000 (40Kgf/cm$^2$) .

The molded body was taken out of the automatic press molding machine and was then transferred into another automatic press molding machine in which the temperature was set at 27°C, and the molding unit was rapidly cooled under a pressure of 4000 kPa (40 Kgf/cm$^2$) for cooling time (4) to prepare a sheet having a thickness of 0.5 mm. The temperature/time conditions for each of the polyketone, the CDI-PP1, and the MAH-PP-2 are shown below.

- Polyketone: heating temperature (1): 260°C
  preliminary heating time (2): 5 minutes
  heating time (3): 3 minutes
  cooling time (4): 3 minutes
- CDI-PP1: heating temperature (1): 200°C
  preliminary heating time (2): 6 minutes
  heating time (3): 4 minutes
  cooling time (4): 5 minutes
- MAH-PP-2: heating temperature (1): 200°C
  preliminary heating time (2): 6 minutes
  heating time (3): 4 minutes
  cooling time (4): 5 minutes

<Manufacture of Laminates>

Laminates were each manufactured using the sheets prepared above and using the automatic press molding machine by sticking the polyketone sheet and the CDI-PP1 sheet together as Example AA2 or sticking the polyketone

sheet and the MAH-PP-2 sheet together as Comparative Example AA2 according to the method described below.

Iron plate (3 mm)/aluminum plate (0.2 mm)/polyfluroethylene sheet (0.3 mm)/metal frame (1.0 mm)/polyfluroethylene sheet (0.3 mm)/aluminum plate (0.2 mm)/iron plate (3 mm) were stacked in the mentioned order, and the polyketone sheet and the CDI-PP1 sheet, or the polyketone sheet and the MAH-PP-2 sheet, each prepared above, were stacked inside the metal frame to prepare a molding unit. The molding unit was installed in the automatic press molding machine set at 260°C, and press bonding was then performed under pressure of a surface pressure of 4000 kPa (40Kgf/ $cm^2$) for 30 seconds.

The molded body was taken out of the automatic press molding machine and was then transferred into another automatic press molding machine in which the temperature was set at 27°C, and the molding unit was rapidly cooled under a pressure of 4000 kPa (40 Kgf/$cm^2$) for 3 minutes to manufacture a laminate.

<Evaluation of Interlayer Adhesive Force of Laminates>

The interlayer adhesive force of the laminates manufactured above was evaluated. The results are shown in Table 2.

[Table 2]

Table 2

| | | Example AA2 | Comparative Example AA2 |
|---|---|---|---|
| Interlayer adhesive force (23°C) | N/15 mm | 37 | 5 |
| Interlayer adhesive force (100°C) | N/15 mm | 22 | 0.7 |
| Interlayer adhesive force (after immersion in hot water) | N/15 mm | 25 | 2 |

[Example AA1']

A five-layered laminate consisting of three types of layers was manufactured changing the temperature of the extruder (40 mmφ) for the CDI-PP1 layer, the temperature of the extruder (30 mmφ) for the polyketone layer, and the temperature of the die part in Example AA1 as shown in Table 3.

The adhesive force of each laminate was evaluated, and the results are shown in Table 3.

[Table 3]

Table 3

| | | | Example AA1 | Example AA1' |
|---|---|---|---|---|
| Temperature condition | CDI-PP1 layer | °C | 280 | 280 |
| | Polyketone layer | ° C | 260 | 280 |
| | Die part | °C | 280 | 280 |
| Interlayer adhesive force (23°C) | | N/15 mm | 36 | 106 |

(Example BB1)

<Manufacture of Composition for Adhesion>

The PP-1 in an amount of 90 parts, the MAH-PP-1 manufactured above in an amount of 10 parts, and the carbodiimide group-containing compound HMV-8CA in an amount of 1.7 parts were mixed, and the resultant mixture was extruded using the twin-screw kneader at a cylinder temperature of 250°C, a screw speed of 200 rpm, and a discharge quantity of 80 g/min to manufacture a pellet of a composition for adhesion (hereinafter, abbreviated as CDI-PP1b).

The obtained CDI-PP1b had an MFR (230°C, load of 2.16 kg) of 3 g/10 min and a density of 0.910 g/cm$^3$. It is to be noted that a peak (1790 cm$^{-1}$) of maleic anhydride disappeared from the CDI-PP1b according to the FT-IR analysis, so that the ratio of the difference (X) between the absorbance derived from the group that reacts with the carbodiimide group in the polyolefin (a) and the absorbance derived from the group that reacts with the carbodiimide group in the CDI-PPlb to the absorbance (Y) derived from the group that reacts with the carbodiimide group in the polyolefin (a) is 1, and therefore the rate of reaction was 100%.

<Preparation of Sheets>

A sheet of the CDI-PP1b and a sheet of the PPS each having a thickness of 1 mm were prepared in the same manner as in Example AA2 and Comparative Example AA2 except that, in <Preparation of Sheets> in Example AA2 and Comparative Example AA2, a metal frame (1 mm) was used, a pellet of CDI-PP1b or PPS (Fortron (R) FX4382T1 manufactured by Ticona) was spread all over the inside of the metal frame to prepare a molding unit, and the temperature/time/pressurization conditions were set as shown below.

- CDI-PP1b: heating temperature (1): 200°C
  preliminary heating time (2): 2 minutes
  heating time (3): 2 minutes
  cooling time (4): 2 minutes
- PPS: heating temperature (1): 320°C
  preliminary heating time (2): 5 minutes
  heating time (3): 5 minutes (surface pressure was changed to 100 Kgf/cm$^2$)
  cooling time (4): 5 minutes (surface pressure was changed to 10000 kPa (100 Kgf/cm$^2$))

<Preparation of Laminate>

The CDI-PP1b sheet and the PPS sheet each prepared above were stacked and heat-sealed for 8 seconds using a heat sealer (TP-701-A/B manufactured by TESTER SANGYO CO., LTD.) and setting the temperature on the PPS side at 300°C, the temperature on the CDI-PP1b side at 150°C, and the pressure at 0.05 MPa to obtain a laminate.

<Evaluation of Interlayer Adhesive Force of Laminate>

The interlayer adhesive force of the laminate manufactured above was measured. The results are shown in Table 4.

[Examples BB2 to BB3 and Comparative Examples BB1 to BB2]

Compositions for adhesion of Examples BB2 to BB3 and Comparative Examples BB1 to BB2 were each manufactured in the same manner as in the manufacture of the composition for adhesion of Example BB1 except that the composition was changed as described in Table 4, and subsequently, manufacture of sheets/laminates and evaluation thereof were also performed in the same manner as in Example BB1. The results are shown in Table 4.

[Table 4]

Table 4

| | Example BB1 | Example BB2 | Example BB3 | Comparative Example BB1 | Comparative Example BB2 |
|---|---|---|---|---|---|
| PP-1 (parts) | 90 | 90 | 90 | 90 | |
| MAH-PP-1 (parts) | 10 | 10 | 10 | 10 | |
| HMV-8CA (parts) | 1.7 | 3.4 | | | |
| HMV-15CA (parts) | | | 1.7 | | |
| Ethylene-GMA copolymer (parts) | | | | | 100 |

(continued)

| | Example BB1 | Example BB2 | Example BB3 | Comparative Example BB1 | Comparative Example BB2 |
|---|---|---|---|---|---|
| Total number of parts | 101.7 | 103.4 | 101.7 | 100 | 100 |
| MFR (g/10 min) | 3 | 3 | 3 | 9 | 10 |
| Density (g/cm$^3$) | 0.910 | 0.910 | 0.910 | 0.910 | 0.940 |
| Rate of reaction (%) | 100 | 100 | 100 | - | - |
| Carbodiimide group content (calculated from amount charged) (mmol/100 g) | 6.0 | 11.8 | 6.4 | - | - |
| Peel strength at 23°C (N/15 mm) | 24 | 24 | 36 | 0.4 | 8 |
| Peel strength at 80°C (N/15 mm) | 16 | 19 | 24 | 0.1 | 8 |
| Peel strength at 100°C (N/15 mm) | 9 | 9 | 14 | 0.1 | 1.5 |
| Peel strength after immersion in hot water (N/15 mm) | 22 | 24 | 36 | 0.1 | 1.8 |

[Example CC1* and Comparative Examples CC1 and CC2]

(*For reference, not according to the claimed invention)

<Preparation of Sheets>

A sheet of a polycarbonate (LEXAN (TM) 141R manufactured by SABIC), a sheet of CDI-PP1, a sheet of the MAH-PE, and a sheet of the MAH-PP-2 were separately prepared using an automatic press molding machine (NSF 50, manufactured by SHINTO Metal Industries Corporation) according to the method described below.

Iron plate (3 mm)/aluminum plate (0.2 mm)/polyfluroethylene sheet (0.3 mm)/metal frame (0.5 mm)/polyfluroethylene sheet (0.3 mm)/aluminum plate (0.2 mm)/iron plate (3 mm) were stacked in the mentioned order, and a pellet of the polycarbonate, the CDI-PP1, MAH-PE, or the MAH-PP-2 was spread all over the inside of the metal frame to prepare a molding unit. The molding unit was installed in the automatic press molding machine in which the heating temperature was set at heating temperature (1), and heating for preliminary heating time (2) was performed without pressurization, and heating for heating time (3) was then performed under pressure of a surface pressure of 4000 kPa (40 Kgf/cm$^2$)

The molded body was taken out of the automatic press molding machine and was then transferred into another automatic press molding machine in which the temperature was set at 27°C, and the molding unit was rapidly cooled under a pressure of 4000 kPa (40 Kgf/cm$^2$) for cooling time (4) to prepare a sheet having a thickness of 0.5 mm. The temperature/time conditions for each of the polycarbonate, the CDI-PP1, the MAH-PE, and the MAH-PP-2 are shown below.

| | |
|---|---|
| • Polycarbonate: | heating temperature (1): 270°C preliminary heating time (2): 5 minutes heating time (3): 3 minutes cooling time (4): 3 minutes |
| • CDI-PP1: | heating temperature (1): 200°C preliminary heating time (2): 6 minutes heating time (3): 4 minutes cooling time (4): 5 minutes |
| • MAH-PE: | heating temperature (1): 177°C preliminary heating time (2): 6 minutes heating time (3): 4 minutes cooling time (4): 5 minutes |
| • MAH-PP-2: | heating temperature (1): 200°C preliminary heating time (2): 6 minutes heating time (3): 4 minutes |
| cooling time (4): | 5 minutes |

<Manufacture of Laminates>

Laminates were each manufactured using the sheets prepared above and using the automatic press molding machine by sticking the polycarbonate sheet and the CDI-PP1 sheet together as Example CC1, sticking the polycarbonate sheet and the MAH-PE sheet together as Comparative Example CC1, or sticking the polycarbonate sheet and the MAH-PP-2 sheet together as Comparative Example CC2 according to the method described below.

Iron plate (3 mm)/aluminum plate (0.2 mm)/polyfluroethylene sheet (0.3 mm)/metal frame (1.0 mm)/polyfluroethylene sheet (0.3 mm)/aluminum plate (0.2 mm)/iron plate (3 mm) were stacked in the mentioned order, and the polycarbonate sheet and the CDI-PP1 sheet, the polycarbonate sheet and the MAH-PE sheet, or the polycarbonate sheet and the MAH-PP-2 sheet, each prepared above, were stacked inside the metal frame to prepare a molding unit. The molding unit was installed in the automatic press molding machine set at 270°C, and press bonding was then performed under pressure of a surface pressure of 4000 kPa (40 $Kgf/cm^2$) for 120 seconds.

The molded body was taken out of the automatic press molding machine and was then transferred into another automatic press molding machine in which the temperature was set at 27°C, and the molding unit was rapidly cooled under a pressure of 4000 kPa (40 Kgf/cm2) for 3 minutes to manufacture a laminate.

<Evaluation of Adhesive Force of Laminates>

The interlayer adhesive force of the laminates manufactured above was evaluated. The results are shown in Table 5.

[Table 5]

Table 5

| | | Example CC1* | Comparative Example CC1 | Comparative Example CC2 |
|---|---|---|---|---|
| Interlayer adhesive force (23 °C) | N/15 mm | 70 | 2 | <1 |
| Interlayer adhesive force. (100°C) | N/15 mm | 28 | 2 | <1 |
| Interlayer adhesive force (after immersion in hot water) | N/15 mm | 61 | 1 | <1 |
| *For reference, not according to the claimed invention. | | | | |

## Claims

1. A laminate comprising:

   a layer (A) comprising a resin not having active hydrogen in a main molecular skeleton thereof; and
   an adhesive layer (B) being at least in partial contact with the layer (A) and comprising a composition for adhesion, wherein
   the composition for adhesion satisfies the following requirements (i) to (iii):

   (i) comprising a polyolefin being a product of reaction between a polyolefin (a) having a group that reacts with a carbodiimide group and a carbodiimide group-containing compound (b);
   (ii) comprising a carbodiimide group in an amount of 0.1 to 50 mmol per 100 g of the composition for adhesion; and
   (iii) having a density of 0.870 to 0.940 $g/cm^3$,

   **characterized in that**
   the layer (A) is a layer (A1) comprising a polyketone or a layer (A2) comprising a polyphenylene sulfide.

2. The laminate according to claim 1, comprising a structure of the layer (A1) comprising a polyketone/the adhesive layer (B) comprising the composition for adhesion/a layer (C) comprising another resin other than a polyketone.

3. The laminate according to claim 2, wherein the layer (C) is a layer comprising a polyolefin.

4. The laminate according to any one of claims 1 to 3, wherein the layer (A1) is a layer comprising a linear polymer comprising: a carbonyl group; and a divalent organic group derived from an ethylenically unsaturated compound or a divalent organic group obtained by connecting two or more divalent organic groups derived from an ethylenically unsaturated compound, with the carbonyl group and the divalent organic group being alternately connected.

5. The laminate according to claim 4, wherein the layer (A1) is a layer comprising an ethylene-carbon monoxide copolymer or an ethylene-propylene-carbon monoxide copolymer.

6. The laminate according to any one of claims 1 to 5, wherein the carbodiimide group-containing compound (b) is a carbodiimide group-containing compound having 5 or more carbodiimide groups in one molecule.

7. The laminate according to any one of claims 1 to 6, obtained by co-extrusion molding, laminate molding, blow molding, or co-injection molding.

8. A method for manufacturing a laminate comprising: a layer (A) comprising a resin not having active hydrogen in a main molecular skeleton thereof; and an adhesive layer (B) being at least in partial contact with the layer (A) and comprising a composition for adhesion, wherein
the method comprises a step of allowing a resin composition comprising the resin not having active hydrogen in a main molecular skeleton thereof and the composition for adhesion to adhere to each other by co-extrusion molding, laminate molding, blow molding, or co-injection molding, and
the composition for adhesion satisfies the following requirements (i) to (iii):

(i) comprising a polyolefin being a product of reaction between a polyolefin (a) having a group that reacts with a carbodiimide group and a carbodiimide group-containing compound (b);
(ii) comprising a carbodiimide group in an amount of 0.1 to 50 mmol per 100 g of the composition for adhesion; and
(iii) having a density of 0.870 to 0.940 g/cm$^3$,

**characterized in that**
the resin not having active hydrogen in a main molecular skeleton thereof is a polyketone or a polyphenylene sulfide, and the layer (A) is a layer (A1) comprising a polyketone or a layer (A2) comprising a polyphenylene sulfide.

9. The method for manufacturing a laminate according to claim 8, wherein the adhesion is performed under a condition of an adhesion temperature of 260°C or higher.

## Patentansprüche

1. Laminat, umfassend:

eine Schicht (A), umfassend ein Harz, das keinen aktiven Wasserstoff in einem Hauptmolekülgerüst davon aufweist; und
eine Klebeschicht (B), die zumindest teilweise mit der Schicht (A) in Kontakt steht und eine Haftzusammensetzung umfasst, wobei
die Haftzusammensetzung die folgenden Anforderungen (i) bis (iii) erfüllt:

(i) sie umfasst ein Polyolefin, das ein Reaktionsprodukt zwischen einem Polyolefin (a) mit einer Gruppe, die mit einer Carbodiimidgruppe reagiert, und einer Carbodiimidgruppen-haltigen Verbindung (b) ist;
(ii) sie umfasst eine Carbodiimidgruppe in einer Menge von 0,1 bis 50 mmol pro 100 g der Haftzusammensetzung; und
(iii) sie weist eine Dichte von 0,870 bis 0,940 g/cm$^3$ auf,

**dadurch gekennzeichnet, dass**
die Schicht (A) eine Schicht (A1), umfassend ein Polyketon, oder eine Schicht (A2), umfassend ein Polyphenylensulfid, ist.

2. Laminat gemäß Anspruch 1, umfassend eine Struktur aus der Schicht (A1), umfassend ein Polyketon/der Klebeschicht (B), umfassend die Haftzusammensetzung/einer Schicht (C), umfassend ein anderes Harz als ein Polyketon.

3. Laminat gemäß Anspruch 2, wobei die Schicht (C) eine Schicht ist, die ein Polyolefin umfasst.

4. Laminat gemäß einem der Ansprüche 1 bis 3, wobei die Schicht (A1) eine Schicht ist, die ein lineares Polymer umfasst, das umfasst: eine Carbonylgruppe; und eine divalente organische Gruppe, die von einer ethylenisch ungesättigten Verbindung stammt, oder eine divalente organische Gruppe, erhalten durch Verbinden von zwei oder mehr divalenten organischen Gruppen, die von einer ethylenisch ungesättigten Verbindung stammen, wobei die Carbonylgruppe und die divalente organische Gruppe abwechselnd verbunden sind.

5. Laminat gemäß Anspruch 4, wobei die Schicht (A1) eine Schicht ist, die ein Ethylen-Kohlenmonoxid-Copolymer oder ein Ethylen-Propylen-Kohlenmonoxid-Copolymer umfasst.

6. Laminat gemäß einem der Ansprüche 1 bis 5, wobei die Carbodiimidgruppen-haltige Verbindung (b) eine Carbodiimidgruppen-haltige Verbindung mit 5 oder mehr Carbodiimidgruppen in einem Molekül ist.

7. Laminat gemäß einem der Ansprüche 1 bis 6, erhalten durch Coextrusionsformen, Laminatformen, Blasformen oder Cospritzgießen.

8. Verfahren zur Herstellung eines Laminats, umfassend:

eine Schicht (A), umfassend ein Harz, das keinen aktiven Wasserstoff in einem Hauptmolekülgerüst davon aufweist; und eine Klebeschicht (B), die zumindest teilweise mit der Schicht (A) in Kontakt steht und eine Haftzusammensetzung umfasst, wobei
das Verfahren einen Schritt umfasst, bei dem eine Harzzusammensetzung, umfassend das Harz, das keinen aktiven Wasserstoff in einem Hauptmolekülgerüst davon aufweist, und die Haftzusammensetzung durch Coextrusionsformen, Laminatformen, Blasformen oder Cospritzgießen aneinander anhaften gelassen werden, und die Haftzusammensetzung die folgenden Anforderungen (i) bis (iii) erfüllt:

(i) sie umfasst ein Polyolefin, das ein Reaktionsprodukt zwischen einem Polyolefin (a) mit einer Gruppe, die mit einer Carbodiimidgruppe reagiert, und einer Carbodiimidgruppen-haltigen Verbindung (b) ist;
(ii) sie umfasst eine Carbodiimidgruppe in einer Menge von 0,1 bis 50 mmol pro 100 g der Haftzusammensetzung; und
(iii) sie weist eine Dichte von 0,870 bis 0,940 g/cm$^3$ auf,

**dadurch gekennzeichnet, dass**
das Harz, das keinen aktiven Wasserstoff in einem Hauptmolekülgerüst davon aufweist, ein Polyketon oder ein Polyphenylensulfid ist, und die Schicht (A) eine Schicht (A1), umfassend ein Polyketon, oder eine Schicht (A2), umfassend ein Polyphenylensulfid, ist.

9. Verfahren zur Herstellung eines Laminats gemäß Anspruch 8, wobei das Anhaften unter einer Bedingung von einer Adhäsionstemperatur von 260°C oder höher durchgeführt wird.

## Revendications

1. Stratifié comprenant :

une couche (A) comprenant une résine ne comportant pas d'hydrogène actif dans un squelette moléculaire principal de celle-ci ; et
une couche adhésive (B) étant au moins en contact partiel avec la couche (A) et comprenant une composition adhésive, dans lequel
la composition adhésive satisfait aux exigences (i) à (iii) suivantes :

(i) comprenant une polyoléfine étant un produit d'une réaction entre une polyoléfine (a) comportant un groupe qui réagit avec un groupe carbodiimide et un composé contenant un groupe carbodiimide (b) ;
(ii) comprenant un groupe carbodiimide en une quantité de 0,1 à 50 mmol pour 100 g de la composition adhésive ; et
(iii) présentant une masse volumique de 0,870 à 0,940 g/cm$^3$,

**caractérisé en ce que**
la couche (A) est une couche (A1) comprenant une polycétone ou une couche (A2) comprenant un sulfure de polyphénylène.

**2.** Stratifié selon la revendication 1, comprenant une structure de la couche (A1) comprenant une polycétone/la couche adhésive (B) comprenant la composition adhésive/une couche (C) comprenant une autre résine différente d'une polycétone.

**3.** Stratifié selon la revendication 2, dans lequel la couche (C) est une couche comprenant une polyoléfine.

**4.** Stratifié selon l'une quelconque des revendications 1 à 3, dans lequel la couche (A1) est une couche comprenant un polymère linéaire comprenant : un groupe carbonyle ; et un groupe organique divalent dérivé d'un composé à insaturation éthylénique ou un groupe organique divalent obtenu par liaison de deux groupes organiques divalents ou plus dérivés d'un composé à insaturation éthylénique, avec le groupe carbonyle et le groupe organique divalent étant liés de manière alternée.

**5.** Stratifié selon la revendication 4, dans lequel la couche (A1) est une couche comprenant un copolymère d'éthylène-monoxyde de carbone ou un copolymère d'éthylène-propylène-monoxyde de carbone.

**6.** Stratifié selon l'une quelconque des revendications 1 à 5, dans lequel le composé contenant un groupe carbodiimide (b) est un composé contenant un groupe carbodiimide comportant 5 groupes carbodiimide ou plus dans une molécule.

**7.** Stratifié selon l'une quelconque des revendications 1 à 6, obtenu par moulage par co-extrusion, moulage en stratifié, moulage par soufflage ou moulage par co-injection.

**8.** Procédé de fabrication d'un stratifié comprenant : une couche (A) comprenant une résine ne comportant pas d'hydrogène actif dans un squelette moléculaire principal de celle-ci ; et une couche adhésive (B) étant au moins en contact partiel avec la couche (A) et comprenant une composition adhésive, dans lequel
le procédé comprend une étape consistant à permettre à une composition de résine comprenant la résine ne comportant pas d'hydrogène actif dans un squelette moléculaire principal de celle-ci et à la composition adhésive d'adhérer l'une à l'autre par moulage par co-extrusion, moulage en stratifié, moulage par soufflage ou moulage par co-injection, et
la composition adhésive satisfait aux exigences (i) à (iii) suivantes :

(i) comprenant une polyoléfine étant un produit d'une réaction entre une polyoléfine (a) présentant un groupe qui réagit avec un groupe carbodiimide et un composé contenant un groupe carbodiimide (b) ;
(ii) comprenant un groupe carbodiimide en une quantité de 0,1 à 50 mmol pour 100 g de la composition adhésive ; et
(iii) présentant une masse volumique de 0,870 à 0,940 g/cm$^3$,

**caractérisé en ce que**
la résine ne comportant pas d'hydrogène actif dans un squelette moléculaire principal de celle-ci est une polycétone ou un sulfure de polyphénylène, et la couche (A) est une couche (A1) comprenant une polycétone ou une couche (A2) comprenant un sulfure de polyphénylène.

**9.** Procédé de fabrication d'un stratifié selon la revendication 8, dans lequel l'adhérence est réalisée dans une condition de température d'adhérence de 260 °C ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1977888 A1
- EP 1860169 A1
- WO 2007040261 A1
- WO 1996503996 A
- JP 10286912 A
- JP 2003268051 A
- US 4880903 A
- JP 47032100 A
- JP 5087527 A
- JP 6013608 A
- WO 2007040261 A